**Europäisches Patentamt**

**European Patent Office**

**Office européen des brevets**

(19)

(11) Numéro de publication: **0 232 664**
**B1**

(12)

## FASCICULE DE BREVET EUROPEEN

(45) Date de publication du fascicule du brevet:
**25.04.90**

(51) Int. Cl.⁴: **F16L 9/18**, E03F 3/02, H02G 9/06

(21) Numéro de dépôt: **86420299.9**

(22) Date de dépôt: **11.12.86**

(54) Elément de canalisation pour réseaux multiples.

(30) Priorité: **12.12.85 FR 8519540**

(43) Date de publication de la demande:
**19.08.87 Bulletin 87/34**

(45) Mention de la délivrance du brevet:
**25.04.90 Bulletin 90/17**

(84) Etats contractants désignés:
**AT BE CH DE ES GB GR IT LI LU NL SE**

(56) Documents cités:
**BE-A- 696 128**
**FR-A- 945 400**
**FR-A- 1 030 929**
**US-A- 1 357 702**

(73) Titulaire: **SOCIETE DES TUYAUX BONNA Société anonyme dite:, 89-91, rue du Faubourg Saint-Honoré, F-75008 Paris(FR)**

(72) Inventeur: **Robert, Jean, 36 rue du Commandant Israel, F-69370 Saint Didier au Mont d'Or(FR)**
Inventeur: **Roulph, Robert, 191 Boulevard Baille Immeuble "C", F-13005 Marseille(FR)**
Inventeur: **Ivorra, Claude, 5 rue des Frères Goncourt, F-69330 Meyzieu(FR)**

(74) Mandataire: **Bratel, Gérard et al, Cabinet GERMAIN & MAUREAU Le Britannia - Tour C 20, boulevard E. Déruelle, F-69003 Lyon(FR)**

ACTORUM AG

**Description**

La présente invention concerne un élément de canalisation, destiné à la réalisation de réseaux multiples, comprenant aussi bien des réseaux de fluides que des réseaux câblés dont les natures peuvent être très différentes, notamment pour la réalisation de réseaux de distribution généralement enterrés, pour sites urbains.

Cet élément de canalisation comprend, de façon connue, une partie centrale relativement lourde, pourvue d'une embase et dans laquelle est percé longitudinalement au moins un conduit débouchant aux deux extrémités de l'élément, et au moins une paroi montée amovible sur la partie centrale de manière à délimiter avec celle-ci un espace technique.

Un tel élément modulaire de canalisation est connu par le document US-A 1 357 702. Une forme approchante est aussi révèlée par le document BE-A 696 128.

Dans le cas du document US-A 1 357 702, l'élément de canalisation comporte un "espace technique" unique, fermé par une seule paroi amovible, qui est en fait un simple conduit prévu par la circulation d'un fluide. Les autres "conduits" percés dans l'embase de la partie centrale ne véhiculent ici aucun fluide, et assurent seulement l'allègement de cette partie centrale, au détriment de sa stabilité.

Dans le document BE-A 696 128, mis à part un égout situé en partie basse, tous les réseaux de fluide ou les câbles sont rassemblés dans le même "espace technique", unique et fermé à sa partie supérieure par une seule paroi amovible.

La juxtaposition de deux ou plusieurs réseaux de nature différente, à l'intérieur du même espace, peut induire des troubles sur leur fonctionnement, par exemple dans le cas de la proximité d'une conduite véhiculant un fluide chaud et d'un réseau électrique.

L'invention vise à éliminer ces inconvénients, en fournissant des moyens qui permettent un regroupement de plusieurs réseaux de nature très différente, tout en offrant la possibilité d'isoler les uns des autres des réseaux incompatibles, les moyens ici proposés étant d'utilisation commode en ce qui concerne leur manutention ainsi que l'accessibilité aux réseaux.

A cet effet, l'invention a pour objet un élément de canalisation du genre indiqué en introduction, caractérisé en ce que la partie centrale présente une section en forme de "T" renversé, son embase étant surmontée par une âme verticale, et en ce que l'élément comprend deux parois symétriques en forme de voussoirs mises en place entre les deux côtés de l'embase et le sommet de l'âme de la partie centrale, de manière à délimiter deux espaces techniques situés de part et d'autre de l'âme, et totalement séparés l'un de l'autre, pour l'installation de réseaux multiples.

Les deux espaces techniques ainsi obtenus, totalement séparés l'un par rapport à l'autre, ainsi que par rapport aux conduits percés dans la partie centrale, permettent d'incorporer dans la même élément de canalisation par exemple un réseau de fluide chaud et un réseau électrique, sans risques dûs au dégagement de chaleur et à la condensation qui s'en suivrait.

Selon une disposition particulière, la partie centrale de l'élément de canalisations selon l'invention comporte un conduit de plus grand diamètre, dont l'axe se situe dans le plan de symétrie vertical de l'élément, et au moins deux conduits latéraux de plus petit diamètre, percés dans l'embase de part et d'autre du conduit de plus grand diamètre. Dans le cas d'une partie centrale avec âme verticale, telle que décrite plus haut, un autre conduit de plus petit diamètre peut être encore percé dans l'âme, au-dessus du conduit de plus grand diamètre. En disposant ainsi de plusieurs conduits parallèles, on peut regrouper plusieurs réseaux de fluides, soit sous pression tels que: eau potable, eau chaude, gaz à usage domestique, air comprimé à usage industriel, etc..., soit à circulation gravitaire (eaux usées, eaux pluviales).

Quant aux espaces techniques, ceux-ci reçoivent principalement des réseaux câblés: distribution électrique, téléphone, télématique, télédistribution par fibre optique ou autre, etc... Un réseau de fluide avec conduits de faible section peut aussi être installé dans l'un de ces espaces techniques, dans la mesure où la nature du fluide véhiculé est compatible avec les réseaux câblés installés dans le même espace technique. Des supports appropriés, fixés sur des faces de la partie centrale et s'étendant dans le ou les espaces techniques, sont prévus pour la pose des réseaux à installer dans ces espaces. Dans le cas d'un élément dont la partie centrale comporte une âme verticale, ces supports sont fixés à différents niveaux sur les deux flancs de l'âme, ces flancs étant inclinés symétriquement sur la verticale, entre autres pour assurer une accessibilité optimale aux réseaux.

La partie centrale, ainsi que la ou les parois de l'élément de canalisation selon l'invention, sont avantageusement pourvues de moyens d'accrochage, pour leur suspension à des moyens de levage, en vue de la manutention de ces parties. La pose des éléments est ainsi facilitée, et peut être réalisée sans moyens de manutention spéciaux. Les moyens d'accrochage dont sont pourvues les parois amovibles permettent, de plus, une manutention séparée de ces parois, donnant accès aux espaces techniques pour des interventions sur des réseaux déjà en place, ou pour l'installation de réseaux supplémentaires dans ces espaces techniques. Ces moyens d'accrochage peuvent être protégés par des bouchons amovibles. Les conduits de la partie centrale peuvent être accessibles par des moyens automatiques, et il est toujours possible de réserver l'un ou plusieurs de ces conduits pour une utilisation ultérieure.

Les parois amovibles sont positionnées sur la partie centrale sans moyens de fixation particuliers, par simple emboîtement avec mise à profit de leurs poids. De préférence, chacune des deux parois en forme de voussoirs prend appui, par son bord longitudinal inférieur, dans une gouttière latérale de l'embase, et par son bord longitudinal supérieur, sur un épaulement prévu près du sommet de l'âme.

Les parties centrales des éléments étant relativement lourdes, il est possible de réaliser un "autobutage" des éléments placés bout à bout. Les parois comportent encore avantageusement, à leurs extrémités, des conformations permettant l'emboîtement de deux parois appartenant à deux éléments consécutifs et situées l'une dans le prolongement de l'autre.

En outre, des moyens de raccordement étanche peuvent être prévus, pour la jonction de l'un au moins des conduits de la partie centrale d'un élément avec le conduit correspondant d'un élément voisin. Ces moyens, logés dans des élargissements prévus à chaque débouché du conduit concerné, assurent la continuité de l'un des réseaux de fluide, en l'isolant parfaitement des autres conduits à la jonction de deux éléments. Sur la longeur de chaque élément, le béton de la partie centrale confère luimême la résistance à l'agressivité chimique de certains fluides. Pour certaines applications, il peut être envisagé que l'un au moins des conduits de la partie centrale comporte un chemisage réalisant une barrière physique supplémentaire pour le fluide parcourant ce conduit. En particulier, dans le cas de conduits véhiculant un fluide sous pression le chemisage peut être réalisé par un tube en métal ou en matériau composite noyé dans le matériau de la partie centrale.

La constitution de réseaux complets et adaptés nécessitant inévitablement des changements de direction et des embranchements, il est encore prévu selon l'invention, en complément des éléments courants de canalisation définis ci-dessus, des connecteurs qui assurent le raccordement de deux ou plusieurs tronçons de canalisations, en réalisant la continuité des différents réseaux parcourant ces tronçons de canalisations. Ces connecteurs sont posés en même temps que les éléments courants, mais peuvent aussi remplacer ultérieurement un élément courant de canalisation, en cas de modification ou d'extension de réseaux existants.

Un connecteur comprend un volume intérieur délimité par un radier, un élément de fermeture supérieur et une paroi latérale de section extérieure polygonale, qui est constituée d'éléments modulaires pleins remplaçables, sur au moins une face latérale, par un élément de raccordement présentant une traversée de section correspondant à celle d'un élément de canalisation, avec des passages dont la disposition correspond à celle des conduits percés dans la partie centrale d'un élément de canalisation à raccorder. La jonction des réseaux, aboutissant à ces traversées, est réalisée par le volume intérieur du connecteur: les réseaux de fluides parcourant les parties centrales des éléments de canalisation sont raccordés en passant par la région centrale du volume intérieur du connecteur, tandis que les réseaux câblés sont raccordés en passant par la périphérie de ce volume, où sont prévus des supports appropriés, fixés contre les faces internes de certains éléments modulaires constituant la paroi latérale du connecteur. Une section par exemple octogonale du connecteur est avantageuse et permet des changements de direction à 45° et 90°; en outre, la structure modulaire de la paroi latérale permet de placer deux éléments de raccordement à des hauteurs différentes, sur le même connecteur, pour le raccordement de deux tronçons de canalisations situés à des niveaux différents.

La combinaison des éléments de canalisation et des connecteurs permet la constitution de réseaux multiples maillés ou ramifiés, qui peuvent être enterrés complétement, notamment dans les zones de circulation automobile, ou seulement partiellement, auquel cas leur partie supérieure visible peut constituer une composante du décor urbain, supportant éventuellement d'autres équipements. Les éléments peuvent être aussi posés directement sur le sol, ou encore être placés sous l'eau ou en position aérienne, par exemple pour un franchissement de rivière. Ces éléments sont disposés horizontalement, ou avec une certaine pente selon le relief et pour des nécessités telles que l'écoulement des eaux usées ou pluviales, si l'un des réseaux est à circulation gravitaire. Même une disposition verticale de certains éléments peut être envisagée, pour des applications particulières. Les éléments de canalisation peuvent, par ailleurs, être précontraints ou postcontraints.

De toute façon, l'invention sera mieux comprise à l'aide de la description qui suit, en référence au dessin schématique annexé représentant, à titre d'exemples non limitatifs, quelques formes d'exécution de cet élément de canalisation pour réseaux multiples, ainsi que des connecteurs associés:

Figure 1 est une vue générale, en perspective, d'un élément courant de canalisation conforme à l'invention;

Figure 2 est une vue en coupe transversale d'un élément de canalisation selon la figure 1, de relativement grande section;

Figure 3 est une vue en coupe transversale d'un élément de canalisation selon la figure 1, mais de relativement petite section, avec indication d'un voussoir en cours de manutention;

Figure 4 est une vue en plan par dessus montrant plusieurs éléments de canalisation assemblés bout à bout;

Figure 5 est une vue en coupe longitudinale de ces éléments, suivant VI-VI de figure 4;

Figure 6 est une vue de détail, en coupe, montrant le profil d'un joint assurant l'étanchéité entre les parties centrales de deux éléments de canalisation assemblés bout à bout;

Figure 7 est une vue en coupe longitudinale, constituant un détail de la figure 5 et montrant les joints d'étanchéité longitudinaux et circonférentiels des voussoirs;

Figure 8 est une vue en coupe transversale, montrant le détail des joints d'étanchéité longitudinaux entre les voussoirs et la partie centrale d'un élément de canalisation;

Figure 9 est une vue partielle, en coupe longitudinale, de la région de raccordement de deux éléments de canalisation, montrant un mode de réalisation de l'étanchéité pour le réseau principal;

Figure 10 est une vue en plan par dessus montrant deux tronçons de canalisation raccordés au moyen d'un connecteur;

Figure 11 est une vue de côté correspondant à la figure 10, avec représentation du connecteur en coupe verticale;

Figure 12 est une vue en coupe horizontale d'un connecteur, montrant le détail de sa structure modulaire;

Figure 13 est une vue en coupe suivant XIII-XIII de figure 12, montrant plus particulièrement un élément de raccordement appartenant à la paroi latérale du connecteur;

Figure 14 est une vue en élévation illustrant l'utilisation d'un connecteur pour le raccordement de deux tronçons de canalisation situés à des niveaux différents;

Figure 15 est une vue en plan par dessus montrant des éléments de canalisation légèrement modifiés, permettant la réalisation de courbes.

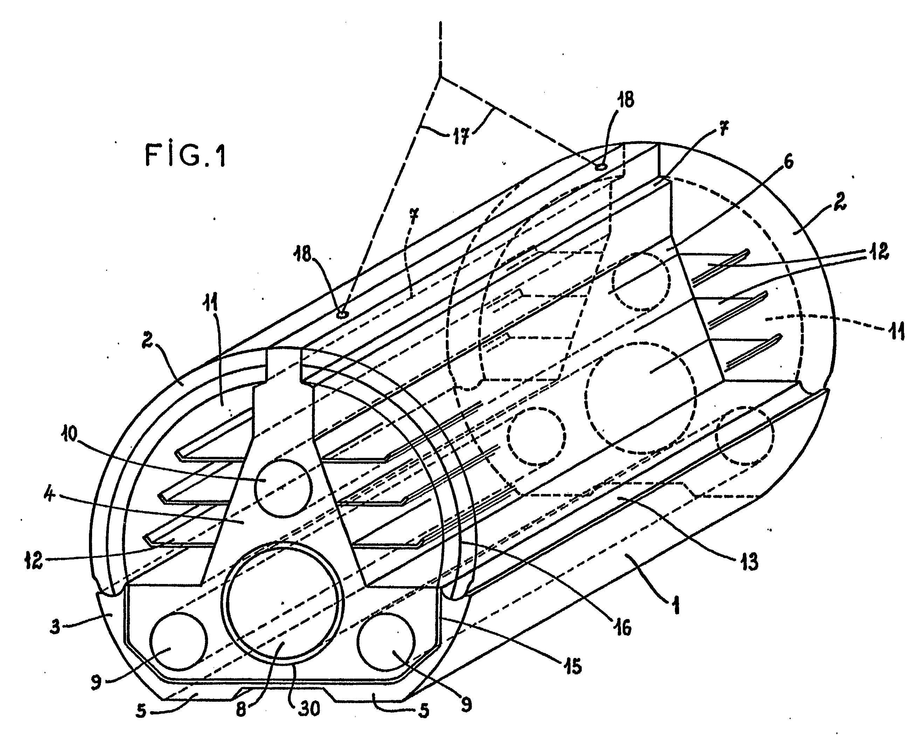

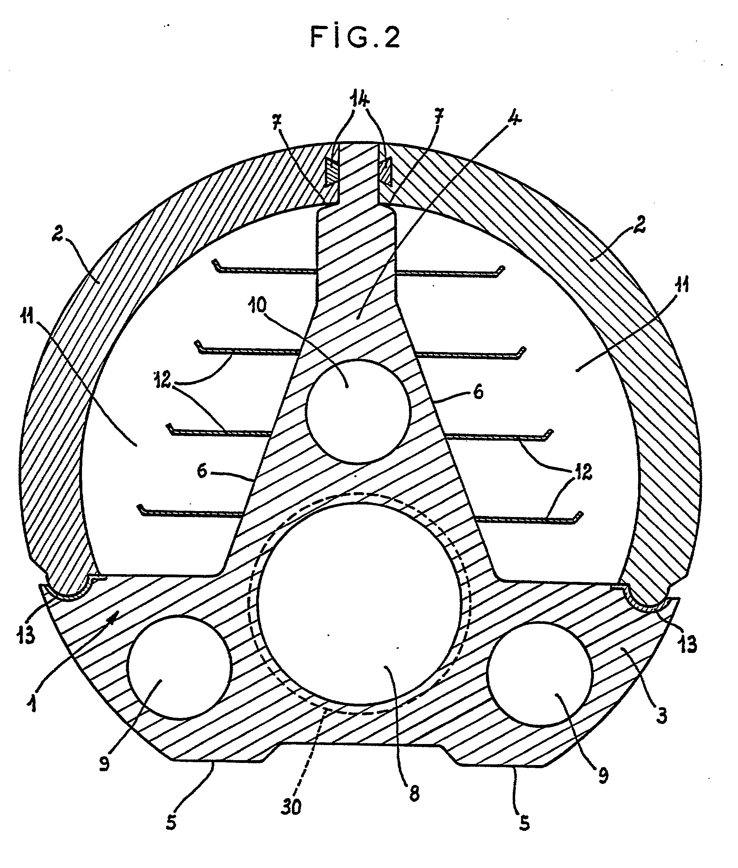

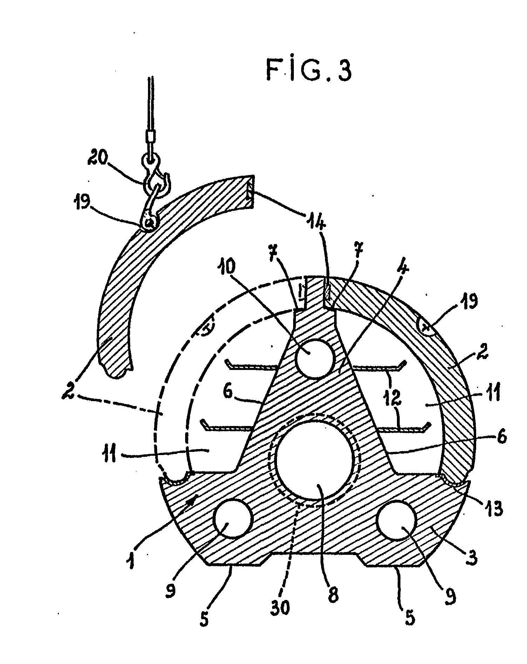

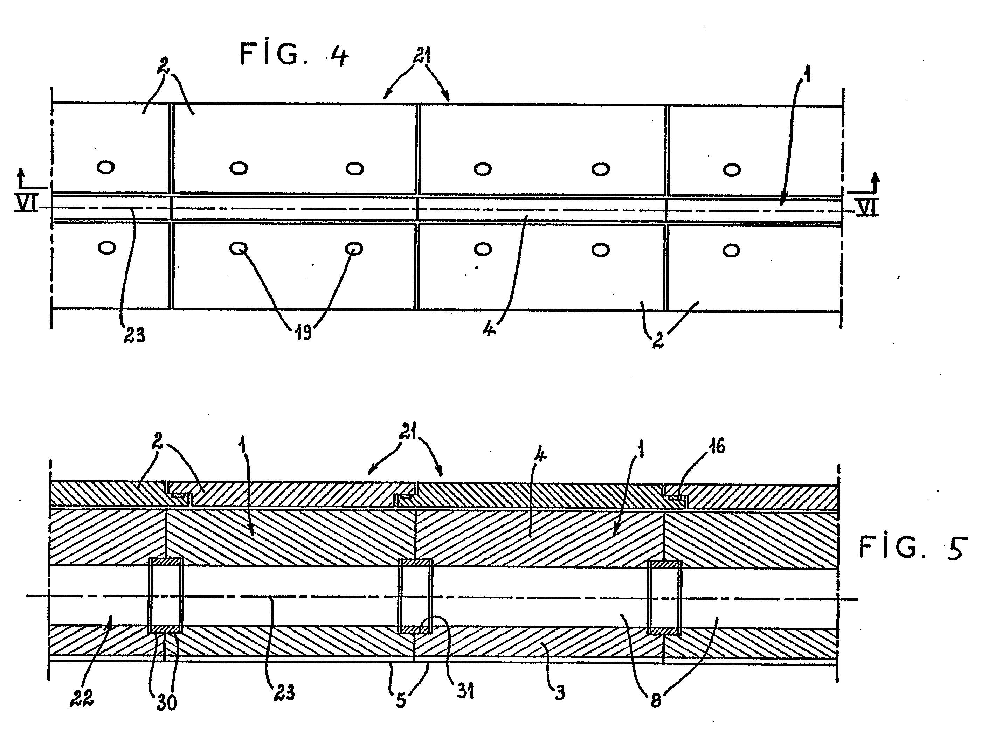

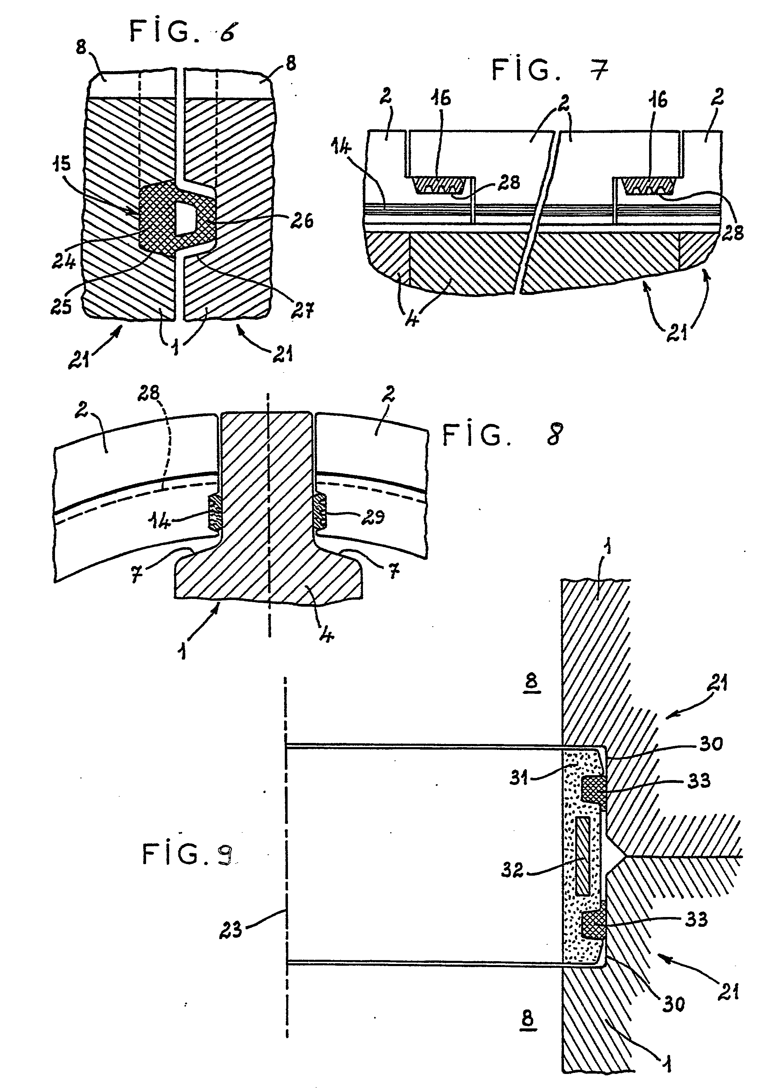

L'élément de canalisation représenté à la figure 1, et montré aussi aux figures 2 et 3 sous des formes légèrement modifiées, est constitué d'une partie centrale 1 et de deux voussoirs 2, toutes ces parties étant réalisées en béton armé. La section de l'ensemble s'inscrit à l'intérieur d'un cercle, de diamètre plus ou moins grand.

La partie centrale 1, qui est la plus lourde, présente une section en forme de "T" renversé, avec une embase horizontale 3 surmontée d'une âme verticale 4 tournée vers le haut. L'embase 3 comporte, à sa partie inférieure, deux longrines d'appui latérales 5. L'âme 4 possède deux flancs 6 inclinés symétriquement sur la verticale, de telle sorte que son épaisseur va en décroissant vers le haut. Cette âme 4 est encore pourvue de deux épaulements symétriques 7 près de son sommet.

Dans la région la plus épaisse de la partie centrale 1, c'est-à-dire à la jonction de l'embase 3 et de l'âme 4, est percé longitudinalement un conduit tubulaire 8 de relativement grand diamètre, destiné à constituer un tronçon d'un réseau principal de fluide. La partie centrale 1 comporte encore, dans l'embase 3, deux conduits tubulaires latéraux 9 de plus petit diamètre percés longitudinalement au-dessus des longrines 5, et dans l'âme 4, un conduit tubulaire supérieur 10, percé longitudinalement au-dessus du conduit 8. Les conduits 9 et 10 sont destinés à constituer des tronçons de réseaux secondaires de fluide.

Les deux voussoirs 2, représentant chacun un arc de cercle d'environ 120°, sont mis en place symétriquement sur la partie centrale 1, entre les deux côtés de celle-ci et son sommet. Ces voussoirs 2 délimitent, avec la partie centrale 1, deux espaces techniques 11 séparés totalement l'un de l'autre par l'âme 4. Sur les deux flancs 6 de l'âme 4 de la partie centrale 1 sont fixés, à différents niveaux, des supports allongés 12 qui permettent l'installation de réseaux supplémentaires divers, notamment de réseaux câblés, répartis dans les deux espaces techniques 11.

Chaque voussoir 2 prend appui sur la partie centrale 1, par son bord longitudinal inférieur, dans une gouttière latérale de l'embase 3, avec interposition d'un joint d'étanchéité longidudinal 13, et par son bord longitudinal supérieur, sur un épaulement 7 de l'âme 4, avec interposition d'un autre joint d'étanchéité longitudinal 14, dont les détails seront précisés plus bas. La partie centrale 1 et les deux voussoirs 2 sont encore pourvus, aux extrémités de l'élément, d'autres joints respectifs 15 et 16 pour l'étanchéité dans la direction circonférentielle, entre deux éléments consécutifs, joints dont les caractéristiques seront également détaillées plus bas.

Les éléments de canalisation possèdent, par exemple, une longueur unitaire de 2,5 m, tandis que le diamètre de leur section peut varier, par exemple, de 0,8 m à 2,0 m, suivant leur appartenance à des canalisations primaires ou à des ramifications. Les figures 2 et 3 représentent ainsi, à la même échelle, d'une part un élément de relativement grande section, et d'autre part un élément de relativement petite section. Bien que conçus tous selon le même principe, ces éléments peuvent présenter certaines différences concernant leurs proportions ou le nombre de supports 12 destinés aux réseaux câblés.

La manutention des éléments complets, notamment pour leur pose, est réalisable comme le montre la figure 1 au moyen d'élingues 17 amarrées sur des points d'accrochage 18 prévus au sommet de l'âme 4 de la partie centrale 1. Les voussoirs 2 sont pourvus de leurs propres points d'accrochage 19, ce qui permet une manutention séparée, autorisant notamment l'accès aux espaces techniques 11, comme montré sur la figure 3 pour le voussoir gauche 2, suspendu à des crochets 20. Les points d'accrochage 18,19 sont constitués par des pièces noyées dans les parties correspondantes, et judicieusement placées par rapport aux centres de gravité de ces parties.

En disposant bout à bout des éléments de canalisation successifs 21 de même section, comme le montrent les figures 4 et 5, on réalise la continuité des différents réseaux de fluides ou autres, tel que le réseau principal de fluide 22 résultant des tronçons successifs constitués par les conduits tubulaires 8 alignés sur un même axe 23 - voir figure 5. Le poids des parties centrales 1 des éléments 21 permet un "autobutage" éventuel, tandis que les voussoirs 2 comportent à leurs extrémités des conformations permettant leur emboîtement. On notera que ces conformations sont alternées d'un élément 21 à l'autre, un voussoir 2 sur deux chevauchant les voussoirs adjacents, ce qui permet de retirer les voussoirs pour accéder aux espaces techniques. L'ensemble peut être enterré totalement ou partiellement, ou encore être posé sur le sol, si sa présence en surface ne constitue pas une gêne.

On décrira maintenant, en référence aux figures 6 à 9, des modes de réalisation des étanchéités entre la partie centrale 1 et les voussoirs 2 d'un même élément de canalisation, ainsi qu'entre deux éléments 21 placés bout à bout.

La figure 6 montre ainsi le détail du profil du joint 15, déjà visible sur la figure 1, qui assure l'étanchéité entre les parties centrales 1 de deux éléments de canalisation consécutifs 21. Ce joint 15 possède une embase pleine 24 montée dans une gorge 25 ménagée dans la face d'extrémité de la partie centrale 1 d'un élément 21, et une aile creuse 26 introduite dans une gorge 27 creusée dans la face d'extrémité de la partie centrale 1 de l'autre élément 21. En se référant aussi à la figure 1, on note que le joint d'étanchéité 15 suit une ligne entourant les débouchés des conduits tubulaires 8 et 9.

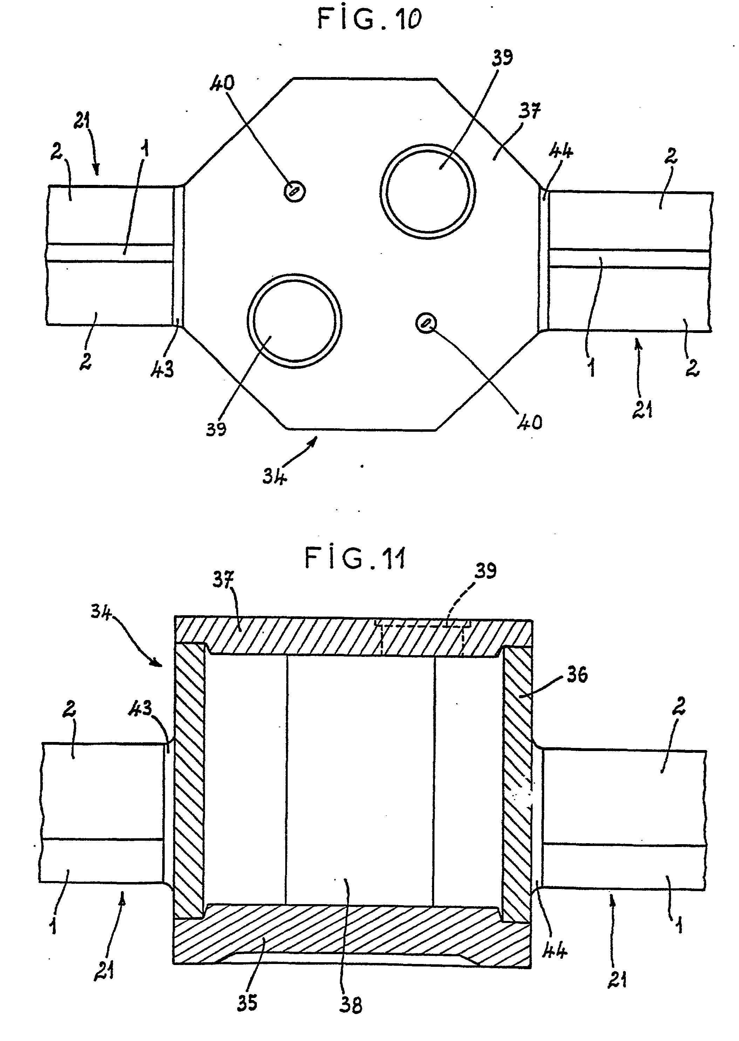

Comme le montre la figure 7, les extrémités des voussoirs 2 d'un élément 21 sur deux comportent, sur les parties réalisant l'emboîtement, des gorges en arcs de cercle 28, recevant les joints 16 déjà précédemment mentionnés, qui assurent l'étanchéité dans la direction circonférentielle, entre deux voussoirs 2 situés l'un dans le prolongement de l'autre, et appartenant à deux éléments de canalisation consécutifs 21. Chaque joint d'étanchéité 16 possède ici une pluralité de nervures parallèles.

La figure 7, et surtout la figure 8, montrent en outre les joints longitudinaux 14, réalisant l'étanchéité entre les bords supérieurs des voussoirs 2 et le sommet de l'âme 4 de la partie centrale 1 d'un élément de canalisation. Ces joints d'étanchéité 14, montés dans des rainures 29 des voussoirs 2, peuvent eux aussi présenter plusieurs nervures parallèles.

Le conduit tubulaire 8 destiné au réseau principal présente, à ses débouchés, un élargissement 30 pour la mise en place d'une étanchéité dont le détail est visible à la figure 10. Une bague moulée en résine 31 est engagée dans les élargissements 30 des deux extrémités de conduits 8 placées l'une en regard de l'autre. Un anneau de renfort métallique 32 est noyé dans la région médiane de la bague 31. Celle-ci présente, dans ses régions terminales, deux gorges annulaires recevant des joints respectifs 33, appliqués contre les parois des élargissements 30 des deux conduits 8.

Des étanchéités du même type peuvent être aussi envisagées à la jonction des autres conduits tubulaires 9 et 10, destinés aux réseaux secondaires.

En complément des éléments de canalisation décrits jusqu'ici, la réalisation d'un réseau nécessite la mise en oeuvre de connecteurs permettant des changements de direction accentués, des embranchements, des changements de section et même des changements de niveau.

Un connecteur 34 comporte de façon générale, comme le montrent les figures 10 et 11, un radier 35, une paroi latérale 36 et un élément de fermeture supérieur 37, qui ensemble délimitent un volume intérieur 38. La paroi latérale 36 est de section extérieure polygonale, par exemple octogonale de manière à offrir huit faces de raccordement pour des éléments de canalisation 21. L'élément de fermeture 37 comporte des regards amovibles 39, ainsi que des points d'accrochage 40 pour sa manutention. Le radier 35 peut être réalisé en béton coulé sur place, alors que la paroi latérale 36 et l'élément de fermeture 37 sont des parties préfabriquées, également en béton.

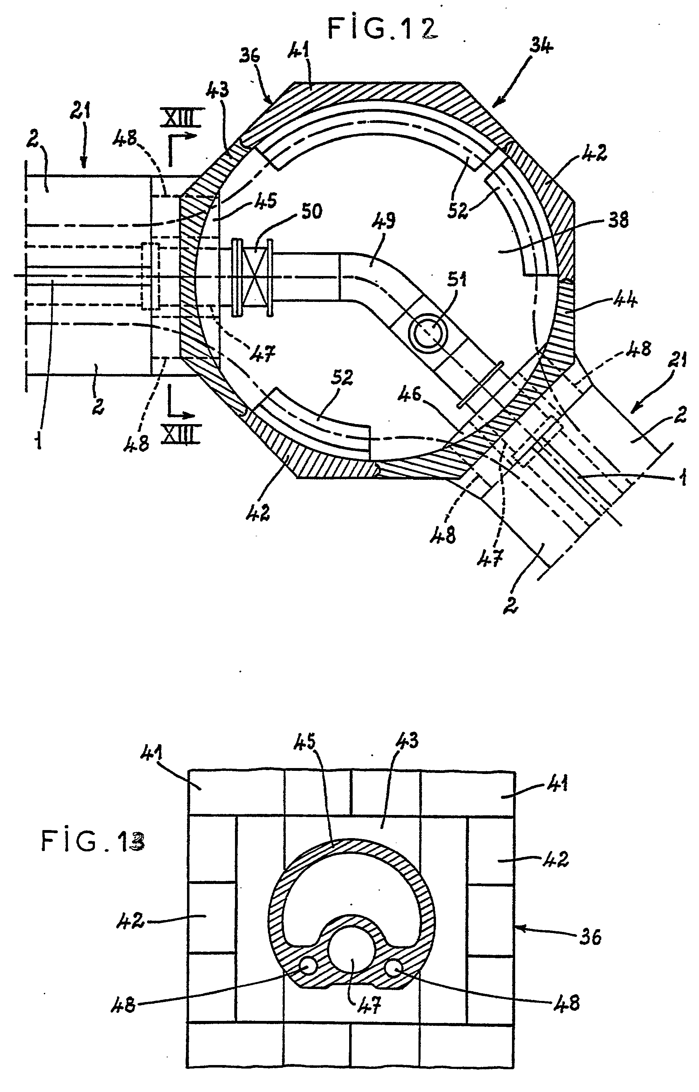

Plus particulièrement, la paroi latérale 36 du connecteur 34 est réalisable en éléments modulaires, qui s'assemblent les uns aux autres pour former des anneaux empilés. Comme le montrent les figures 12 et 13, le système modulaire choisi comprend des éléments pleins 41 et 42, les uns de plus grandes dimensions et les autres de plus petites dimensions, ainsi que des éléments de raccordement 43 et 44, adaptés aux différentes sections des éléments de canalisation 21, pour l'entrée et la sortie des réseaux concernés dont la continuité doit être assurée. Tous ces éléments modulaires 41 à 44 s'assemblent entre eux par emboîtement, de préférence avec interposition de joints d'étanchéité aussi bien horizontaux que verticaux. Les éléments de raccordement 43 et 44 présentent des traversées cylindriques 45 ou tronconiques 46, avec des passages de grand diamètre 47 ou de plus petit diamètre 48 correspondant aux conduits tubulaires d'un élément de canalisation 21 - voir notamment figure 13.

Les réseaux de fluide principal et secondaires sont réunis par l'intérieur du connecteur 34, comme illustré sur la figure 12 seulement pour le réseau principal. Des éléments de conduit 49, droits ou coudés, relient ainsi deux éléments de raccordement 43 et 44, en passant par la région centrale du volume intérieur 38. Sur ces éléments de conduit 49 peuvent être intercalés des vannes 50, des regards 51 ou autres composants tels que piquages, prises de pression, etc...

Les réseaux câblés traversent le connecteur 34 en passant à la périphérie du volume intérieur 38. A cet effet, des supports incurvés 52 sont fixés contre les faces internes cylindriques de certains éléments 41 et 42 de la paroi latérale 36.

Les regards 39 permettent l'accès au volume intérieur 38 du connecteur 34, pour les visites d'entretien ou autres interventions. Une ouverture totale peut être obtenue, pour les travaux importants, en retirant l'élément de fermeture 37.

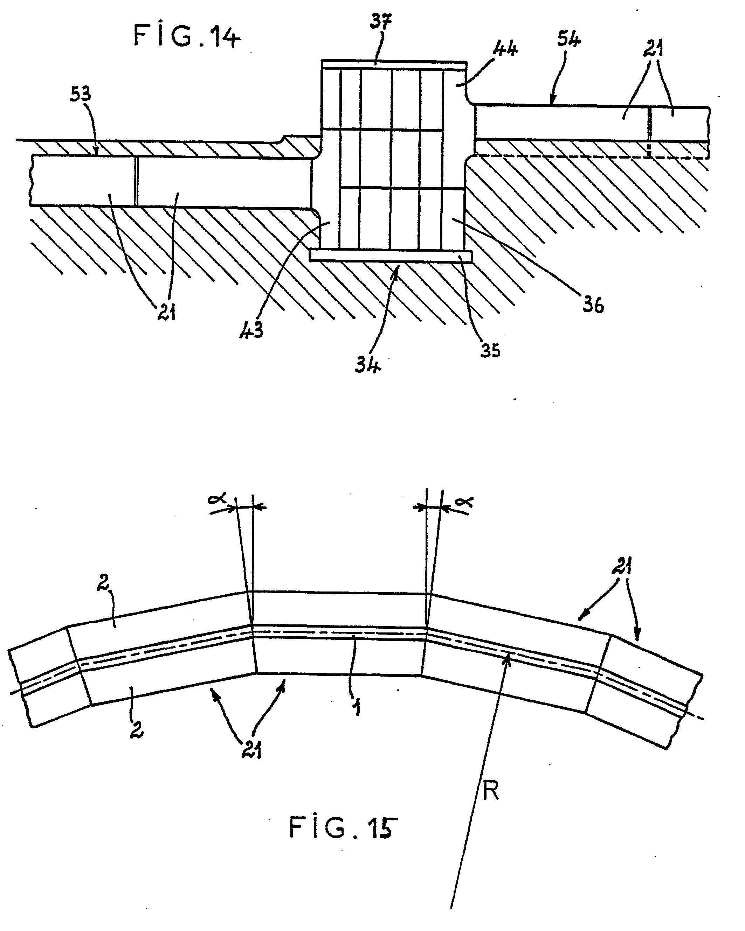

Les connecteurs sont enterrés totalement ou partiellement, en fonction de l'implantation des canalisations dans le sol. Comme le montre la figure 14, un connecteur 34 peut servir au raccordement de deux tronçons de canalisation 53 et 54 situés à des niveaux différents: le premier tronçon 53 est enterré, tandis que le second tronçon 54 est semi-enterré. Les éléments de raccordement 43 et 44 pour ces deux tronçons de canalisation 53 et 54 sont placés à des niveaux décalés.

Les connecteurs 34, tels que décrits précédemment, permettent des changements de direction à 45° et 90°. Pour l'obtention de changements de direction selon un angle quelconque, et aussi pour permettre à une canalisation de suivre une courbe de relativement grand rayon R. certains éléments 21 peuvent être légèrement modifiés, comme le montre la figure 15. Les faces d'extrémité des éléments 21 en question sont orientées suivant des directions de plans non perpendiculaires aux axes longitudinaux de ces éléments, avec une inclinaison selon un angle $\alpha$ dont la valeur est comprise par exemple entre 1° et 7°. La mise bout à bout de tels éléments réalise une ligne brisée assimilable à un arc de cercle possédant un certain rayon de courbure R.

On ne s'éloignerait pas du cadre de l'invention en réalisant des éléments de canalisation selon les mêmes principes mais dont la section ne s'inscrirait pas dans un cercle, ou encore en remplaçant les voussoirs par une ou des parois de profil quelconque.

## Revendications

1. Elément de canalisation comprenant une partie centrale (1) relativement lourde, pourvue d'une embase (3) et dans laquelle est percé longitudinalement au moins un conduit (8, 9, 10) débouchant aux deux extrémités de l'élément, et au moins une paroi (2) montée amovible sur la partie centrale (1) de manière à délimiter avec celle-ci un espace technique, caractérisé en ce que la partie centrale (1) présente une section en forme de "T" renversé, son embase (3) étant surmontée par une âme verticale (4), et en ce que l'élément comprend deux parois symétriques en forme de voussoirs (2) mises en place entre les deux côtés de l'embase (3) et le sommet de l'âme (4) de la partie centrale (1), de manière à délimiter deux espaces techniques (11) situés de part et d'autre de l'âme (4), et totalement séparés l'un de l'autre, pour l'installation de réseaux multiples.

2. Elément de canalisation pour réseaux multiples selon la revendication 1, caractérisé en ce que sa partie centrale (1) et ses deux parois en forme de voussoirs (2) sont réalisées en béton armé.

3. Elément de canalisation pour réseaux multiples selon la revendication 1 ou 2, caractérisé en ce que chaque paroi en forme de voussoir (2) prend appui, par son bord longitudinal inférieur, dans une gouttière latérale de l'embase (3), et par son bord longitudinal supérieur, sur un épaulement (7) prévu près du sommet de l'âme (4).

4. Elément de canalisation pour réseaux multiples selon l'une quelconque des revendications 1 à 3, caractérisé en ce que sa partie centrale (1) comporte un conduit de plus grand diamètre (8), dont l'axe se situe dans le plan de symétrie vertical de l'élément, et au moins deux conduits latéraux de plus petit diamètre (9), percés dans l'embase de part et d'autre du conduit de plus grand diamètre (8).

5. Elément de canalisation pour réseaux multiples selon l'une quelconque des revendications 1 à 4, caractérisé en ce que sa partie centrale (1) comporte encore un autre conduit de plus petit diamètre (10), percé dans l'âme (4) au-dessus du conduit de plus grand diamètre (8).

6. Elément de canalisation pour réseaux multiples selon l'une quelconque des revendications 1 à 5, caractérisé en ce que l'un au moins (8) des conduits de la partie centrale (1) présente, à ses débouchés, des élargissements (30) prévus pour loger des moyens de raccordement étanche (31) du conduit considéré (8) avec le conduit correspondant d'un élément voisin.

7. Elément de canalisation pour réseaux multiples selon l'une quelconque des revendications 1 à 6, caractérisé en ce que l'un au moins des conduits (8, 9, 10) de la partie centrale (1) comporte un chemisage, réalisable notamment par un tube noyé dans le matériau de la partie centrale (1).

8. Elément de canalisation pour réseaux multiples selon l'une quelconque des revendications 1 à 7, caractérisé en ce qu'il comprend encore des supports (12) fixés sur des faces (6) de la partie centrale (1) et s'étendant dans les espaces techniques (11), ces supports (12) étant prévus pour la pose des réseaux, tels que réseaux câblés, placés dans lesdits espaces techniques (11).

9. Elément de canalisation pour réseaux multiples selon la revendication 8, caractérisé en ce que les supports précités (12) sont fixés à différents niveaux sur les deux flancs (6) de l'âme (4) de la partie centrale (1).

10. Elément de canalisation pour réseaux multiples selon l'une quelconque des revendications 1 à 9, caractérisé en ce que les deux flancs (6) de l'âme (4) de la partie centrale (1) sont inclinés symétriquement sur la verticale, l'épaisseur de l'âme (4) allant en décroissant vers le haut.

11. Elément de canalisation pour réseaux multiples selon l'une quelconque des revendications 1 à 10, caractérisé en ce que les deux parois en forme de voussoirs (2) représentent chacune, sur une section sensiblement circulaire dans laquelle s'inscrit l'élément, un arc de cercle d'environ 120°.

12. Elément de canalisation pour réseaux multiples selon l'une quelconque des revendications 1 à 11, caractérisé en ce que la partie centrale (1), ainsi que la ou les parois (2), sont pourvues de moyens d'accrochage (18, 19), pour leur suspension à des moyens de levage (17, 20).

13. Elément de canalisation pour réseaux multiples selon l'une quelconque des revendications 1 à 12, caractérisé en ce que les parois (2) comportent, à leurs extrémités, des conformations permettant l'emboîtement de deux parois appartenant à deux éléments consécutifs (21) et situées l'une dans le prolongement de l'autre.

14. Elément de canalisation pour réseaux multiples selon la revendication 13, caractérisé en ce que les conformations des extrémités des parois (2) sont alternées d'un élément (21) à l'autre, de sorte qu'une paroi sur deux chevauche les parois adjacentes.

15. Canalisations pour réseaux multiples réalisées à partir d'éléments selon l'une quelconque des revendications 1 à 14, caractérisées en ce qu'elles comprennent, en complément de ces éléments (21), des connecteurs (34) pour le raccordement de deux ou plusieurs tronçons de canalisations, chaque connecteur (34) comprenant un volume intérieur (38) délimité par un radier (35), un élément de fermeture supérieur (37) et une paroi latérale (36) de section extérieure polygonale, qui est constituée d'éléments modulaires pleins (41, 42) remplaçables, sur au moins une face latérale, par un élément de raccordement (43, 44) présentant une traversée (45, 46) de section correspondant à celle d'un élément de canalisation (21), avec des passages (47, 48) dont la disposition correspond à celle des conduits (8, 9) percés dans la partie centrale (1) d'un élément à raccorder.

16. Canalisations pour réseaux multiples selon la revendication 15, caractérisées en ce que des supports (52) sont fixés contre les faces internes de certains éléments (41, 42) de la paroi latérale (36) de chaque connecteur (34), pour le raccordement des réseaux câblés.

**Patentansprüche**

1. Bauelement für die Kanalisation mit einem verhältnismäßig schweren Mittelteil (1) mit einer Basis (3), in der sich in Längsrichtung wenigstens eine Leitung (8, 9, 10) erstreckt, die bis zu den beiden Enden des Elements durchgeht, sowie mit wenigstens einer Wand (2), die lösbar am Mittelteil (1) derart befestigt ist, daß zusammen mit dem Mittelteil ein Technikraum begrenzt ist, dadurch gekennzeichnet, daß das Mittelteil (1) als umgekehrtes "T" ausgebildet ist, an dessen Basis (3) sich nach oben ein vertikaler Steg (4) anschließt, und daß zwei symmetrische Wände (2) in Gewölbeform vorgesehen sind, die zwischen den beiden Enden der Basis (3) und der Spitze des Stegs (4) des Mittelteils (1) angeordnet sind derart, daß zwei Technikräume (11) begrenzt werden, die beidseits des Stegs (4) angeordnet sind und die für die Installation von Mehrfachleitungen vollständig getrennt sind.

2. Bauelement nach Anspruch 1, dadurch gekennzeichnet, daß das Mittelteil (1) und seine beiden gewölbeartigen Wände (2) aus armiertem Beton bestehen.

3. Bauelement nach Anspruch 1 oder 2, dadurch gekennzeichnet, daß jede gewölbeartige Wand (2) an ihrer unteren Längskante sich in einer seitlichen Rinne der Basis (3) abstützt und an ihrer oberen Längskante an einer Schulter (7), die dem oberen Ende des Stegs benachbart ausgebildet ist.

4. Bauelement nach einem der Ansprüche 1 bis 3, dadurch gekennzeichnet, daß das Mittelteil (1) eine Leitung (8) mit größerem Durchmesser aufweist, deren Achse sich in der vertikalen Symmetrieachse des Bauelements befindet, sowie wenigstens zwei seitliche Leitungen (9) mit kleinerem Durchmesser, die sich in der Basis befinden, und zwar beidseits der Leitung (8) mit größerem Durchmesser.

5. Bauelement nach einem der Ansprüche 1 bis 4, dadurch gekennzeichnet, daß das Mittelteil (1) zusätzlich eine weitere Leitung (10) mit kleinerem Durchmesser aufweist, die sich im Steg (4) über der Leitung (8) mit größerem Durchmesser befindet.

6. Bauelement nach einem der Ansprüche 1 bis 5, dadurch gekennzeichnet, daß wenigstens eine der Leitungen (8) des Mittelteils an ihren Enden Verbreiterungen (30) aufweist, die zur Aufnahme von dichten Anschlußmitteln (31) der betreffenden Leitung (8) mit einer entsprechenden Leitung eines benachbarten Bauelements dienen.

7. Bauelement nach einem der Ansprüche 1 bis 6, dadurch gekennzeichnet, daß wenigstens eine der Leitungen (8, 9, 10) des Mittelteils (1) eine Auskleidung aufweist, die vorzugsweise aus einem Rohr besteht, das in das Material des Mittelteils (1) eingebettet ist.

8. Bauelement nach einem der Ansprüche 1 bis 7, dadurch gekennzeichnet, daß zusätzliche Stützen (12) an den Flächen des Mittelteils (1) befestigt sind, die sich in die Technikräume erstreckten wobei die Stützen (12) zur Aufnahme von Leitungen dienen, beispielsweise von Kabeln, die in den Technikräumen (11) verlaufen.

9. Bauelement nach Anspruch 8, dadurch gekennzeichnet, dass die Stützen (12) auf unterschiedlichen Höhen an den beiden Flanken (6) des Stegs (4) des Mittelteils (1) befestigt sind.

10. Bauelement nach einem der Ansprüche 1 bis 9, dadurch gekennzeichnet, daß die beiden Flanken (6) des Stegs (4) des Mittelteils (1) bezüglich der Vertikalen symmetrisch geneigt verlaufen, wobei die Dicke des Stegs nach oben abnimmt.

11. Bauelement nach einem der Ansprüche 1 bis 10, dadurch gekennzeichnet, daß die beiden gewölbeartigen Wände (2) im wesentlichen auf einem Kreisbogen verlaufen, der das Bauelement umschreibt, wobei die Wände einen Kreisbogen von etwa 120° einnehmen.

12. Bauelement nach einem der Ansprüche 1 bis 11, dadurch gekennzeichnet, daß das Mittelteil (1) und auch die Wände (2) mit Verankerungsmitteln (18, 19) für ein Hebezeug (17, 20) ausgerüstet sind.

13. Bauelement nach einem der Ansprüche 1 bis 12, dadurch gekennzeichnet, daß die Wände (2) an ihren Enden Formgebungen haben, die ein Ineinandergreifen von zwei Wänden ermöglichen, die zwei aufeinander folgenden Bauelementen (21) zugehören und die miteinander fluchten.

14. Bauelement nach Anspruch 13, dadurch gekennzeichnet, daß die Formgebungen der Enden der Wände (2) von einem Bauelement (21) zum anderen alternierend vorgesehen sind derart, daß jede zweite Wand die benachbarten Wände übergreift.

15. Kanalisationen für Mehrfachleitungen, hergestellt aus Bauelementen nach einem der Ansprüche 11 bis 14, dadurch gekennzeichnet, daß zusätzlich zu den Bauelementen (21) Verbinder (34) für die Verbindung von zwei oder mehr Kanalisationsabschnitten vorgesehen sind, wobei jeder Verbinder (34) ein Innenvolumen (38) aufweist, das von einer Grundplatte (35), einem oberen Abschlußelement (37) und von einer Seitenwand (36) begrenzt ist, die einen polygonalen Außenquerschnitt hat und die modulartige, austauschbare Elemente (41, 42) aus Vollmaterial an wenigstens einer Seitenfläche aufweist, wobei ein Verbindungselement (43, 44) eine Passage (45, 46) mit einem Querschnitt ausbildet, der dem Querschnitt eines Bauelements (21) entspricht, und wobei Durchgänge (47, 48) vorgesehen sind, deren Anordnung derjenigen der Leitungen (8, 9) entspricht, die im Mittelteil (1) eines zu verbindenden Elements vorgesehen sind.

16. Kanalisationen nach Anspruch 15, dadurch gekennzeichnet, daß Stützen (52) an den Innenflächen einiger Elemente (41, 42) der Seitenwand (36) jedes Verbinders (34) zur Verbindung von Kabeln vorgesehen sind.

**Claims**

1. A duct element including a relatively heavy central portion (1), provided with a base (3) and in which is longitudinally formed at least one duct (8, 9, 10) opening at the two ends of the element, and at least one wall (2) removably mounted on the central portion (1) so as to delimit with the latter a service space, characterised in that the central portion (1) has a section in the shape of an inverted "T", its base (3) being surmounted by a vertical web (4), and in that the element includes two symmetrical walls (2) in the form of arched members located between the two sides of the base (3) and the top of the web (4) of the central portion (1), so as to delimit two service spaces (11) located to either side of the web (4), and completely separated from one another, for the installation of multiple networks.

2. A duct element for multiple networks according to claim 1, characterised in that its central portion (1) and its two walls (2) in the form of arched members are made of reinforced concrete.

3. A duct element for multiple networks according to claim 1 or 2, characterised in that each wall (2) in the form of an arched member bears, by its lower longitudinal edge, in a lateral groove in the base (3), and by its upper longitudinal edge, on a shoulder (7) provided close to the top of the web (4).

4. A duct element for multiple networks according to any one of claims 1 to 3, characterised in that its central portion (1) has a duct (8) of larger diameter, the axis of which is located in the vertical plane of symmetry of the element, and at least two lateral ducts (9) of smaller diameter, formed in the base to either side of the larger diameter duct (8).

5. A duct element for multiple networks according to any one of claims 1 to 4, characterised in that its central portion (1) additionally includes another duct (10) of smaller diameter formed in the web (4) above the larger diameter conduit (8).

6. A duct element for multiple networks according to any one of claims 1 to 5, characterised in that one (8) at least of the ducts in the central portion (1) has, at its outlets, enlargements (30) provided to house sealed connection means (31) for the relevant duct (8) with the corresponding duct of an adjoining element.

7. A duct element for multiple networks according to any of claims 1 to 6, characterised in that one at least of the ducts (8, 9, 10) in the central portion (1) has a lining, formed in particular by a tube embedded in the material of the central portion (1).

8. A duct element for multiple networks according to any one of claims 1 to 7, characterised in that it additionally includes supports (12) fixed to the faces (6) of the central portion (1) and extending into the service spaces (11), these supports (12) being provided for laying of the networks, such as wiring networks, located in said service spaces (11).

9. A duct element for multiple networks according to claim 8, characterised in that the aforementioned supports (12) are fixed at different levels on the two sides (6) of the web (4) of the central portion (1).

10. A duct element for multiple networks according to any one of claims 1 to 9, characterised in that the two sides (6) of the web (4) of the central portion (1) are symmetrically inclined to the vertical, the thickness of the web (4) decreasing towards the top.

11. A duct element for multiple networks according to any one of claims 1 to 10, characterised in that the two walls (2) in the form of arched members each represents, over a substantially circular cross-section within which the element is inscribed, a circular arc of about 120°.

12. A duct element for multiple networks according to any one of claims 1 to 11, characterised in that the central portion (1), as well as the wall or walls (2), are provided with hanging means (18, 19), for their suspension on lifting means (17, 20).

13. A duct element for multiple networks according to any one of claims 1 to 12, characterised in that the walls (2) have, at their ends, formations allowing the interlocking of two walls belonging to two consecutive elements (21) and located one in the extension of the other.

14. A duct element for multiple networks according to claim 13, characterised in that the formations on the ends of the walls (2) are alternated from one element (21) to the other, such that every other wall overlaps the adjacent walls.

15. Ducting for multiple networks made from elements in accordance with any one of claims 1 to 14, characterised in that they include, complementary to these elements (21), connectors (34) for joining two or more duct sections, each connector (34) including an internal volume (38) delimited by a floor (35), an upper closure element (37) and a lateral wall (36) having a polygonal external cross-section, which is constituted by complete modular elements (41, 42) which may be replaced on at least one lateral face, by a connecting element (43, 44) having a cross-piece (45, 46) of cross-section corresponding to that of a pipework element (21), with channels (47, 48) the arrangement of which corresponds to that of the ducts (8, 9) formed in the central portion (1) of an element to be connected.

16. Ducting for multiple networks according to claim 15, characterised in that supports (52) are fixed against the internal faces of certain parts (41, 42) of the lateral wall (36) of each connector (34) for connecting wiring networks.

FIG.1

# FİG.2

FiG.3

EP 0 232 664 B1

FIG. 4

FIG. 5

FIG. 6

FIG. 7

FIG. 8

FIG. 9

FİG.10

FİG.11

## FİG.12

## FİG.13

FIG.14

FIG.15